# EUROPÄISCHE PATENTSCHRIFT

(11) **EP 1 964 617 B1**
(45) Veröffentlichungstag und Bekanntmachung des Hinweises auf die Patenterteilung: **05.12.2012**
(21) Anmeldenummer: 08003766.6
(22) Anmeldetag: 29.02.2008
(51) Int. Cl.: B05B 15/04, B05B 15/12

(54) **Anlage zum Beschichten von Werkstücken, insbesondere Lackieranlage**
Device for coating workpieces, in particular varnishing device
Installation de revêtement de pièces à usiner, en particulier installation de laquage

(30) Priorität: 02.03.2007 DE 102007010636
(43) Veröffentlichungstag der Anmeldung: 03.09.2008
(73) Patentinhaber: inTEC GmbH Lackiersysteme, 42699 Solingen (DE)
(72) Erfinder: Ledvina, Rudolf, 42115 Wuppertal (DE); Rödder, Michael, 42699 Solingen (DE)
(74) Vertreter: Vomberg, Friedhelm

(56) Entgegenhaltungen:
- EP-A1- 1 132 186
- DE-U1- 8 113 028
- DE-U1- 29 520 824
- FR-A1- 2 504 412
- US-A- 1 964 790
- US-A- 2 734 480

## Beschreibung

Die Erfindung betrifft eine Anlage zum Beschichten von Werkstücken, die entlang einer linearen Förderstrecke durch eine rotierende Trommel mit einer Einlauföffnung und einer Auslauföffnung geführt und mittels mindestens einer Spritzpistole besprüht werden, wobei die Trommel mit einer Absaugeinrichtung verbunden ist.

Bereits in der DE-U-81 13 028.7 wird eine Vorrichtung zur Rückgewinnung der vorbeigespritzten Sprühmittelmenge mit einer automatischen Spritzanlage beschrieben, die vorzugsweise als Durchlaufspritzanlage ausgestattet ist und mindestens einen Spritzkopf und ein Auffangbecken für das überschüssige Sprühmittel aufweist, das über Filter mittels einer Rückförderpumpe in den Sprühmittelbehälter zurückgeführt wird. Um den technischen Aufwand zu minimieren wird vorgeschlagen, dass der Spritzkopf innerhalb einer drehbar gelagerten Trommel angeordnet ist, auf deren Innenfläche ein feststehendes, zum Auffangbecken geneigtes Abstreiflineal geführt ist. Durch die Verwendung einer sich drehenden Trommel, welche den durch ein oder mehrere Spritzköpfe gebildeten Arbeitsraum umschließt, soll die an den zu besprühenden Artikeln vorbeigespritzte Sprühmittelmenge nach verhältnismäßig großer Wegstrecke auf die Innenfläche der Trommel gelangen, von der sie kontinuierlich durch ein feststehendes Abstreiflineal abgenommen und dem Auffangbecken zugeführt wird. Die Trommel kann entweder als zur Waagerechten geneigter Kreiszylinder oder als Kegelstumpf mit einer kreisförmigen Stirnfläche ausgebildet sein, der um eine waagerechte Achse drehbar ist. In jedem Fall bewirkt der Neigungswinkel bzw. der Kegelwinkel, dass die vom Abstreiflineal von der Innenfläche der Trommel abgenommene Sprühmittelmenge ohne zusätzliche Fördereinrichtungen zum Auffangbecken fließt.

In der DE 295 20 824 U1 wird eine Farbspritzanlage gemäß dem Oberbegriff des Anspruchs 1 mit einem die zu spritzenden Werkstücke transportiereriden Horizontalförderer, einer mit mindestens einer Filtermatte ausgerüsteten Absaugeinrichtung, mit einer sich in Durchlaufrichtung der Werkstücke erstreckenden Spritztrommel mit in Durchlaufrichtung der Werkstücke gesehen einer vorderen Einlauföffnung und einer hinteren Auslauföffnung beschrieben, wobei der Spritztrommel die Spritzpistole zugeordnet ist. Diese Farbspritzanlage soll insbesondere zum Spritzen von Möbelteilen ausgelegt sein, die beispielsweise in Form von Leisten mittels eines Horizontalförderers durch die Anlage transportiert werden. Der Horizontalförderer kann z. B. ein Bandförderer mit einem oder mehreren Stahlbändern sein. Auch in dieser Druckschrift wird das Problem behandelt, überschüssiges Spritzmittel aufzufangen und nochmals zu verwerten. Hierzu ist eine Absaugeinrichtung mit Filtermatten vorgesehen. Um die Rückgewinnung des überschüssigen Spritzmittels zu verbessern und die benötigte Leistung der Absaugeinrichtung zu minimieren und schließlich um das Spritzmittel-Luftgemisch ausschließlich in den durch die Absaugeinrichtung vorbestimmten Weg zu führen, wo es sich an vorhandenen Prallflächen niederschlägt, an denen es weder antrocknet noch herabtropft, wird vorgeschlagen, dass die Spritztrommel mittels eines Antriebs rotierend bewegt wird, dass die Spritzpistolen im Bereich der Einlauföffnung angeordnet sind und dass im Bereich der Auslauföffnung der Spritztrommel ein konisch ausgebildeter Ansaugring angeordnet ist, dessen größter Durchmesser an der der Spritztrommel zugewandten Seite liegt. Die Rotation der Spritztrommel soll gewährleisten, dass der sich an den Innenwänden niedergeschlagene Farbnebel nach unten abläuft, wo er in einfacher Weise in ein Auffanggefäß abgeleitet werden kann. Durch den konisch ausgebildeten Ansaugring soll entweder gereinigte Rückluft oder Luft aus der Umgebung angesaugt werden, wodurch verhindert werden soll, dass ein aus dem Spritzmittel-Luftgemisch bestehender Nebel unkontrolliert die Spritztrommel verlässt. Innerhalb der Spritztrommel ist eine der Auslauföffnung zugeordnete senkrecht zur Drehachse der Spritztrommel sich erstreckende Prallplatte angeordnet, die gewährleisten soll, dass das Spritzmittel-Luftgemisch über einen Ringspalt die Spritztrommel verlässt. Der Mantel der Spritztrommel ist geschlossen und konisch ausgebildet.

Es ist Aufgabe der vorliegenden Erfindung die eingangs genannte Anlage zu verbessern, insbesondere die Abführung des überschüssigen Spritzgutes zu optimieren.

Zur Lösung dieser Aufgabe wird die Anlage nach Anspruch 1 vorgeschlagen, die erfindungsgemäß dadurch gekennzeichnet ist, dass die Trommel von der Einlauföffnung in Förderrichtung gesehen und von der Auslauföffnung entgegen der Förderrichtung gesehen jeweils einen bis auf ein maximales Maß zunehmenden Durchmesser besitzt, dass im Bereich des größten Trommeldurchmessers ein ringförmiger, mit der Absaugeinrichtung verbundener Absaugschlitz angeordnet ist. Vorzugsweise weist ein sich um den Absaugschlitz erstreckender Absaugkanal teilweise eine im Querschnitt spiralförmig sich erweiternde Innenmantelfläche auf.

Bereits die doppelt konische Ausgestaltung der Trommel mit entgegengesetzt geneigten Flächen bewirkt in Verbindung mit der Absaugeinrichtung, welche über den ringförmigen Schlitz mit Flüssigkeitspartikeln versehene Luft absaugt, eine optimale Abführung des Aerosols bzw. eine Abscheidung der überschüssigen Lackbestandteile. Die im Prinzip bereits nach dem Stand der Technik bekannte Rotation der Trommel verhindert ein Anhaften bzw. Absetzen von Lackbestandteilen. Gleichermaßen alternativ wie additiv bewirkt der teilweise im Querschnitt spiralförmig sich erweiternde Innenmantel das Absaugkanals, der sich um den Absaugschlitz erstreckt, dass die im abgeführten Gas-Flüssigkeitsstrom enthaltenen Flüssigkeitspartikel auf eine gekrümmte Bahn mit ständig wachsendem Durchmesser geführt werden, wo sie entsprechend dem wachsenden Durchmesser an der Absaugkanalwandung geführt werden, ohne dass die Gefahr besteht, dass einzelne Tropfen wieder auf das Werkstück zurückfallen. Am Ende des Absaugkanals mit einer spiralförmig sich erweiternden Innenmantelfläche ist ein Auffangbehälter angeordnet. Das noch in dem Gas-Flüssigkeitsstrom verbleibende Spritzgut wird spätestens in einem nachgeschalteten Filter entfernt.

Weiterbildungen der Erfindung sind in den Unteransprüchen beschrieben.

So werden, insbesondere zur Behandlung von rohrförmigen Gegenständen vorzugsweise mehrere, insbesondere in äquidistanter Winkelstellung zueinander angeordnete Spritzpistolen im Bereich der Einlauföffnung der Trommel angeordnet. Um Rohre mit unterschiedlichem Rohrdurchmesser behandeln zu können, sind die Spritzpistolen radial verstellbar angeordnet.

Zur Optimierung der Ansaugströmung ist die Trommel zu einer senkrecht zur Förderstrecke liegenden Ebene spiegelsymmetrisch ausgebildet.

Die Absaugeinrichtung besitzt zudem einen Abscheideturm mit einem Filter, durch den der Luft- bzw. Aerosol-Strom vorzugsweise aufwärts führbar ist. Durch diese im Prinzip nach dem Stand der Technik bekannte Anordnung wird die Restmenge an Flüssigbestandteilen wirksam abgeschieden.

Im unteren Bereich des sich um den ringförmigen Absaugschlitz erstreckenden Absaugkanals ist ein Auffangbehälter für das abgeschiedene Flüssigkeitsgut vorgesehen, der vorzugsweise mit einer Rückführungsleitung zu einem Spritzvorratsbehälter ausgebildet ist, in der eine Recyclatpumpe und ein Spritzgutfilter angeordnet sind.

Vorzugsweise ist die Trommel in einem Gehäuse befestigt, das in einem festen Gestell höhenverstellbar und/oder quer zur Förderrichtung horizontal verschiebbar angeordnet ist. Die Höhenverstellbarkeit des Gehäuses schafft die Möglichkeit, die Spritz- und Absaugeinrichtung so zu positionieren, dass das Spritzgut stets zentriert hindurchgeführt werden kann. Dies ist insbesondere für wechselnde Durchmesser von rohrförmigen Werkstücken von Vorteil. Die Förderstrecke selbst braucht nicht geändert zu werden.

Die horizontale Verschiebbarkeit des Gestells schafft die Möglichkeit, dass die Trommel mit Spritz- und Absaugeinrichtung aus der Förderstrecke herausgefahren werden kann, so dass die Förderstrecke noch nutzbar ist und gleichzeitig notwendige Wartungs- oder Einstellarbeiten an der übrigen Anlage durchgeführt werden können.

Zum Lackieren von Werkstücken benötigt man im Regelfall eine zweiteilige Anlage; im ersten Teil wird der verwendete Lack auf das Werkstück aufgetragen, wohingegen im zweiten Teil der Anlage nach entsprechendem Weitertransport des Werkstückes der Lack einer Trocknung bzw. Aushärtung unterzogen wird. Die vorliegende Einrichtung ist insbesondere zum Besprühen mittels eines UV-Lackes konzipiert, der durch Bestrahlung mit UV-Licht aushärtbar ist. Vorzugsweise befindet sich in Förderrichtung gesehen hinter der Auslauföffnung der Trommel mindestens eine Einrichtung zur Bestrahlung des Werkstückes, insbesondere mindestens eine UV-Lampe zum Aushärten des aufgetragenen UV-Lackes. Vorzugsweise ist die Bestrahlungseinrichtung bzw. sind die Bestrahlungseinrichtungen radial verstellbar angeordnet.

Nach einer weiteren Ausgestaltung der Erfindung sind die Bestrahlungseinrichtung(en) und die Spritzpistole(n) über eine Synchronisierungseinrichtung derart miteinander verbunden, dass deren Radialverstellung gemeinsam und synchron erfolgt.

Weiterhin vorzugsweise ist eine automatische Regeleinrichtung vorgesehen, mit der die Größe, insbesondere ein Rohrdurchmesser des zu behandelnden Werkstückes erfasst und die Spritzpistole(n) und die Bestrahlungseinrichtung(en) in Abhängigkeit von der Werkstückgröße auf das zur Werkstückbehandlung optimale Abstandsmaß gemeinsam radial verstellt werden. Auf diese Art und Weise lässt sich der Spritzvorgang automatisieren.

Das zur Aushärtung von UV-Lack benötigte UV-Licht muss aus Gründen der Arbeitssicherheit abgeschirmt werden. Entsprechendes gilt auch für solche Bestrahlungseinrichtungen, die aufgrund der verwendeten Wärmestrahlung schon zur Vermeidung von Wärmeverlusten eingekapselt sein sollten. Daher ist die Bestrahlungseinrichtung nach einer Weiterbildung der Erfindung in einem bis auf den Bereich der Förderstrecke abgeschlossenen Raum angeordnet. An der Austrittsöffnung dieses Raums ist eine Verschlusseinrichtung vorgesehen, die vorzugsweise aus zwei schwenkbaren Klappen oder einer Ringblende besteht, welche die Austrittsöffnung, solange das Werkstück dort nicht durchgeführt wird, vollständig verschließt oder, sofern das Werkstück dort durchgeführt wird, bis auf einen notwendigen Durchlassbereich teilweise verschließt.

Weitere Ausführungsbeispiele der Erfindung sowie deren Vorteile werden im Folgenden anhand der Zeichnungen beschrieben. Es zeigen:
- Fig. 1: eine Prinzipskizze einer Förderstrecke durch eine rotierende Trommel mit einer Spritzeinrichtung,
- Fig. 2: einen Querschnitt durch die Förderstrecke im Bereich der Trommel mit einer Absaugeinrichtung,
- Fig. 3: eine Querschnittsansicht durch ein vertikal wie horizontal verschiebbares Gehäuse mit einer hieran befestigten Trommel und
- Fig. 4: eine Rückansicht der Vorrichtung mit schwenkbaren Klappen sowie
- Fig. 5: eine entsprechende Rückansicht der Vorrichtung mit einer verschließbaren Ringblende.

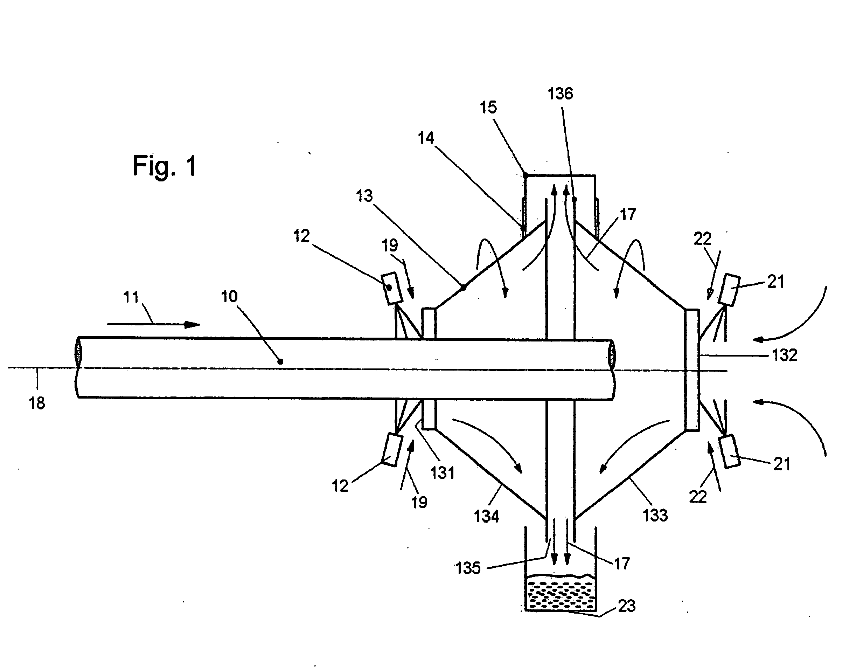

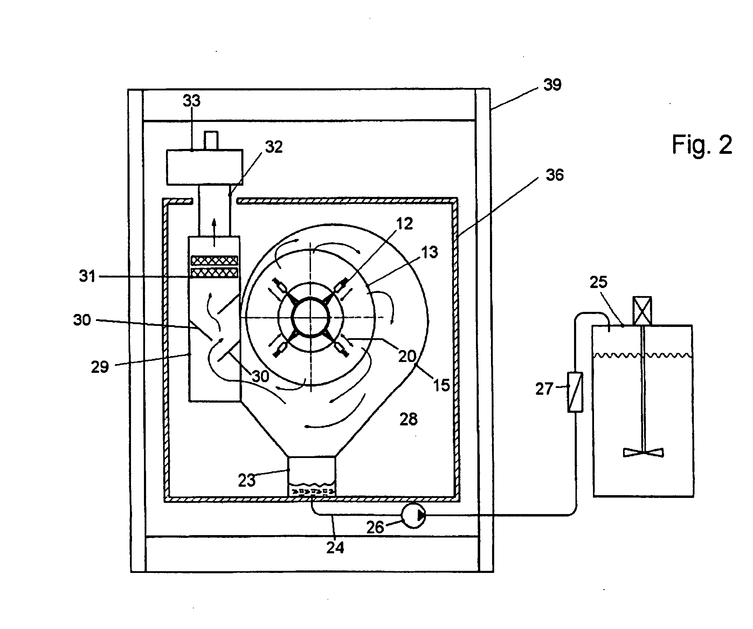

Wie aus Fig. 1 ersichtlich, wird ein Rohr 10 in Richtung des Pfeiles 11 entlang einer vorgegebenen Förderstrecke bewegt, die durch entlang einer aus mehreren Spritzpistolen 12 bestehende Spritzeinrichtung durch eine Trommel 13 geführt wird. Die Trommel 13 besitzt eine Einlauföffnung 131 sowie eine Auslauföffnung 132 und jeweils von der Einlauföffnung 131 in Vorderrichtung 11 gesehen und von der Auslauföffnung 132 entgegen der Vorderrichtung 11 gesehen jeweils einen bis auf ein maximales Maß zunehmenden Durchmesser, d. h., dass die Trommel jeweils konisch ausgebildete Innenwandungen 133 und 134 mit entgegengesetzt gerichteter Konizität aufweist. Inmitten der Trommel, d. h. in einer Ebene quer zu der Förderstrecke, ist ein ringförmiger Schlitz 135 vorgesehen, der im vorliegenden Fall durch Trommelschaufeln 136 begrenzt wird. Anstelle der Trommelschaufeln 136, die sich radial auswärts erstrecken, können jedoch auch solche Wandausgestaltungen gewählt werden, die sich in längsaxialer Richtung teilweise überlappen. Um den ringförmigen Absaugschlitz 135 ist ein Absaugkanal 15 angeordnet, der teilweise eine im Querschnitt spiralförmig sich erweiternde Innenmantelfläche (siehe Fig. 2) aufweist. Zwischen dem Absaugkanal 15 und der Trommel 13 ist eine Abdichtung 14 vorgesehen, die gewährleistet, dass die über den Schlitz 135 abgesaugte Luft ohne Verlust in den Absaugkanal 15 abgeführt wird, wie dies durch Pfeil 17 angedeutet ist.

Die Trommel ist vorzugsweise kugelgelagert und rotiert um die gemeinsame Achse 18.

Die Spritzeinrichtung, die aus mehreren Spritzpistolen 12 besteht, ist vorzugsweise an der Trommel 13 befestigt. Jede der Spritzpistolen ist, wie durch Pfeile 19 angedeutet, radial verstellbar angeordnet (siehe auch Doppelpfeile 20 in Fig. 2).

Hinter der Auslauföffnung 132 sind UV-Lampen 21 vorgesehen, welche ebenfalls in Richtung der Pfeile 22 radial verstellbar sind.

Vorzugsweise ist die Radialverstellung der Spritzpistolen 12 sowie der UV-Lampen synchronisiert, so dass mit einer Radialverstellung der Spritzpistolen automatisch die entsprechende Radialverstellung der UV-Lampen einhergeht, die zur Aushärtung von UV-Lampen benötigt wird. Die Trommel 12 wird beispielsweise mit einer Geschwindigkeit von 1 Hz gedreht.

Unterhalb der Trommel befindet sich ein Auffangbehälter 23, der vorzugsweise über eine Verbindungsleitung 24 mit einem Farbarbeitsbehälter 25 verbunden ist. In dieser Verbindungsleitung 24 sind eine Recyclatpumpe 26 sowie ein Filter 27 angeordnet. Der Farbarbeitsbehälter 25 ist über eine nicht dargestellte Versorgungsleitung mit den Spritzpistolen 12 verbunden.

Wie Fig. 2 zu entnehmen ist, besitzt der Absaugkanal 15 einen sich über mehr als 180° erstreckenden Innenmantel, der sich im Querschnitt spiralförmig erweitert. Diese spiralförmige Erweiterung, die aus Fig. 2 ersichtlich ist, führt dazu, dass sich Flüssigkeitstropfen zentrifugalkraftbedingt am Innenmantel abscheiden, wo sie durch die Luftströmung (siehe Pfeile 28) mitgerissen und in dem Auffangbehälter 23 gesammelt werden. Im weiteren Luftstrom ist ein Abscheideturm 29 angeordnet, in dem die Luft von unten nach oben geführt wird. Dieser Abscheideturm besitzt vorzugsweise mehrere schräg gestellte Prallbleche, an denen weitere Flüssigkeitsteilchen abgeschieden werden, die dann in den Auffangbehälter 23 ablaufen. Ferner besitzt der Abscheideturm 29 im oberen Bereich einen Filter 31, der dafür sorgt, dass nur entsprechend gereinigte Luft in den Abluftkanal 32 gelangt, in dem der Abluftventilator 33 zur Luftförderung angeordnet ist.

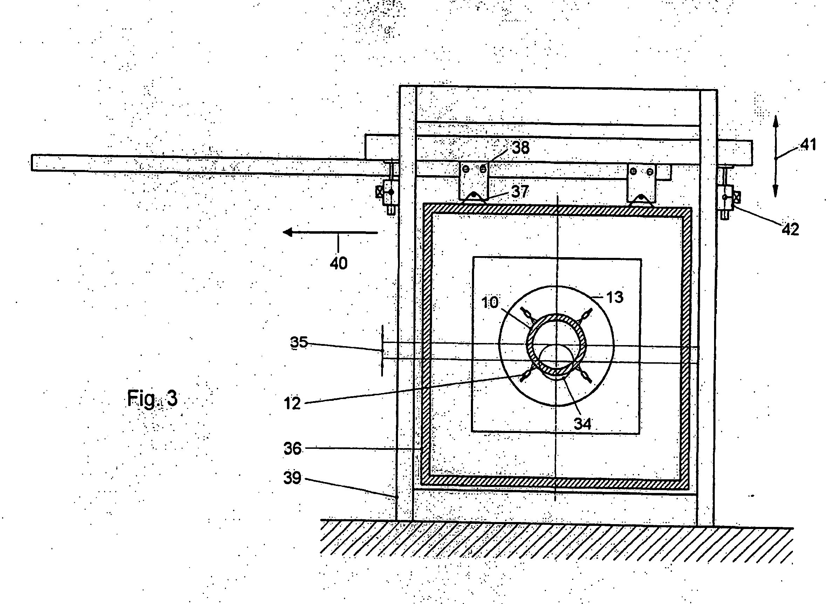

Die Trommel 13 ist in einem um den Hub 35 höhenverstellbaren Gehäuse 36 angeordnet. Die erforderliche Hubverstellung ergibt sich in Abhängigkeit aus unterschiedlichen Rohrdurchmessern für zu behandelnde Rohre 10 bzw. 34, die exemplarisch in Fig. 3 dargestellt sind. Ist die Spritzeinrichtung mit vier Spritzdüsen 12 auf den Durchmesser des Rohres 10 eingestellt, so kann durch Hubverschiebung um das Maß 35 ohne Höhenveränderung der Förderstrecke das nächste zu behandelnde Rohr 34 mit einem kleineren Durchmesser in Bezug auf die Spritzeinrichtung zentriert werden. Die Spritzdüsen 12 werden nach der Zentrierung radial nach innen bewegt, um so den optimalen Abstand zum Rohr 34 einzustellen.

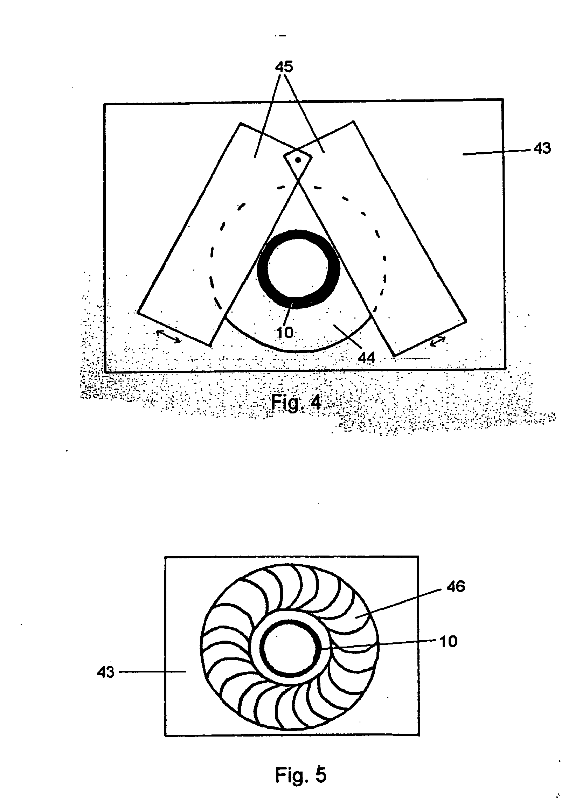

Das höhenverstellbare Gehäuse 36 ist über eine Gehäuseaufhängung 37 mit einem Fahrwerk 38 derart verbunden, dass das komplette Gehäuse aus einem festen Gestell 39 in Richtung des Pfeiles 40 waagrecht herausbewegt werden kann. Die durch das feste Gestell hindurchführende Förderstrecke kann somit für andere Zwecke genutzt werden. Die Hubverstellung in Richtung des Doppelpfeiles 41 wird mittels eines Hubantriebs 42 gewährleistet. Fig. 4 und 5 zeigen jeweils eine Rückansicht der Anlage mit der Rückwand 43, die eine mit Öffnung 44 zur Durchführung eines Rohres 10 aufweist, die ganz oder teilweise durch schwenkbare Klappen 45 oder durch eine Blende 46 verschließbar ist. Hiermit wird gewährleistet, dass die Strahlung der UV-Lampen 21 gegenüber etwaigen Bedienungspersonen abgeschirmt wird.

## Patentansprüche

1. Anlage, insbesondere Lackieranlage, zum Beschichten von Werkstücken (10, 34),die entlang einer linearen Förderstrecke durch eine rotierende Trommel (13) mit einer Einlauföffnung (131) und einer Auslauföffnung (132) geführt und mittels mindestens einer Spritzpistole (12) besprüht werden, wobei die Trommel (13) mit einer Absaugeinrichtung verbunden ist, **dadurch gekennzeichnet, dass**
die Trommel (13) von der Einlauföffnung (131) in Förderrichtung (11) gesehen und von der Auslaufrichtung (132) entgegen der Förderrichtung (11) gesehen jeweils einen bis auf ein maximales Maß zunehmenden Durchmesser besitzt, dass im Bereich des größten Trommeldurchmessers ein ringförmiger, mit der Absaugeinrichtung verbundener Absaugschlitz (135) angeordnet ist.

2. Anlage nach Anspruch 1, **dadurch gekennzeichnet, dass** ein sich um den Absaugschlitz (135) erstreckender Absaugkanal (15) teilweise eine im Querschnitt spiralförmig sich erweiternde Innenmantelfläche aufweist.

3. Anlage nach einem der Ansprüche 1 oder 2, **dadurch gekennzeichnet, dass** mehrere, vorzugsweise in äquidistanter Winkelstellung zueinander angeordnete Spritzpistolen (12) im Bereich der Einlauföffnung (131) angeordnet sind, wobei die Spritzpistolen (12) radial verstellbar sind.

4. Anlage nach einem der Ansprüche 1 bis 3, **dadurch gekennzeichnet, dass** die Trommel (13) zu einer senkrecht zur Förderstrecke liegenden Ebene spiegelsymmetrisch ausgebildet ist.

5. Anlage nach einem der Ansprüche 1 bis 4, **dadurch gekennzeichnet, dass** die Absaugeinrichtung einen Abscheideturm (29) mit einem Filter (31) aufweist, durch den der Luft- bzw. Aerosolstrom vorzugsweise aufwärts führbar ist.

6. Anlage nach einem der Ansprüche 1 bis 5, **dadurch gekennzeichnet, dass** im unteren Bereich des sich um den ringförmigen Absaugschlitz (135) erstreckenden Absaugkanal (15) ein Auffangbehälter (23) für abgeschiedene Flüssigkeiten vorgesehen ist, der vorzugsweise mit einer Rückführungsleitung (24) zu einem Spritzgutvorratsbehälter (25) verbunden ist, in der eine Recyclatpumpe (26) und ein Spritzgutfilter (27) angeordnet sind.

7. Anlage nach einem der Ansprüche 1 bis 6, **dadurch gekennzeichnet, dass** die Trommel (13) in einem Gehäuse (36) befestigt ist, das in einem festen Gestell (39) höhenverstellbar und/oder quer zur Förderrichtung (11) horizontal verschiebbar angeordnet ist.

8. Anlage nach einem der Ansprüche 1 bis 7, **dadurch gekennzeichnet, dass** in Förderrichtung (11) gesehen hinter der Auslauföffnung (132) mindestens eine Einrichtung zur Bestrahlung des Werkstückes vorgesehen ist, vorzugsweise mindestens eine UV-Lampe (21) zum Aushärten von UV-Lack, wobei die Bestrahlungseinrichtung(en) vorzugsweise radial verstellbar angeordnet ist/sind.

9. Anlage nach Anspruch 8, **dadurch gekennzeichnet, dass** die Bestrahlungseinrichtung(en) und die Spritzpistole(n) über eine Synchronisierungseinrichtung derart miteinander verbunden sind, dass eine Radialverstellung synchron erfolgt.

10. Anlage nach Anspruch 9, **gekennzeichnet durch** eine automatische Regeleinrichtung, mit der die Größe, insbesondere ein Rohrdurchmesser, des zu behandelnden Werkstückes erfasst und die Spritzpistole(n) und die Bestrahlungseinrichtung(en) in Abhängigkeit von der Werkstückgröße auf das zur Werkstückbehandlung optimale Abstandsmaß gemeinsam radial verstellt werden.

11. Anlage nach einem der Ansprüche 8 bis 10, **dadurch gekennzeichnet, dass** die Bestrahlungseinrichtung in einen bis auf den Bereich der Förderstrecke abgeschlossenen Raum angeordnet ist und dass an der Austrittsöffnung (44) dieses Raumes eine Verschlusseinrichtung (45, 46) angeordnet ist, vorzugsweise bestehend aus zwei schwenkbaren Klappen (45) oder einer Ringblende (46), welche die Austrittsöffnung (44), solange das Werkstück dort nicht durchgeführt wird, vollständig verschließt oder - sofern das Werkstück dort durchgeführt wird - bis auf einen notwendigen Durchlassbereich teilweise verschließt.

## Claims

1. Device, in particular varnishing device, for coating workpieces (10, 34) which are passed along a linear feed path through a rotating drum (13) with an inlet opening (131) and an outlet opening (132) and are sprayed by means of at least one spray gun (12), the drum (13) being connected to a suction removal device, **characterized in that** the drum (13) has a diameter which, when seen from the inlet opening (131) in the feed direction (11) and from the outlet direction (132) counter to the feed direction (11), respectively increases up to a maximum size, and **in that** an annular suction slit (135) that is connected to the suction removal device is arranged in the region of the largest drum diameter.

2. Device according to Claim 1, **characterized in that** a suction removal channel (15) extending around the suction removal slit (135) partly has an inner lateral surface that widens spirally in cross section.

3. Device according to either of Claims 1 and 2, **characterized in that** a number of spray guns (12), preferably arranged at equidistant angular positions in relation to one another, are arranged in the region of the inlet opening (131), the spray guns (12) being radially adjustable.

4. Device according to one of Claims 1 to 3, **characterized in that** the drum (13) is formed mirror-symmetrically in relation to a plane lying perpendicularly to the feed path.

5. Device according to one of Claims 1 to 4, **characterized in that** the suction removal device has a separating tower (29) with a filter (31), through which the stream of air or aerosol can be passed, preferably upwards.

6. Device according to one of Claims 1 to 5, **characterized in that** in the lower region of the suction removal channel (15) extending around the annular suction removal slit (135) there is provided a collecting container (23) for separated liquids, which is preferably connected by a return line (24) to a spray material storage container (25), in which a recyclate pump (26) and a spray material filter (27) are arranged.

7. Device according to one of Claims 1 to 6, **characterized in that** the drum (13) is fastened in a housing (36), which is arranged in a fixed framework (39) such that it can be adjusted in height and/or can be horizontally displaced transversely to the feed direction (11).

8. Device according to one of Claims 1 to 7, **characterized in that** behind the outlet opening (132), when seen in the feed direction (11), there is provided at least one device for irradiating the workpiece, preferably at least one UV lamp (21) for curing UV varnish, the irradiating device(s) preferably being arranged in a radially adjustable manner.

9. Device according to Claim 8, **characterized in that** the irradiating device(s) and the spray gun(s) are connected to one another by means of a synchronizing device in such a way that a radial adjustment is performed synchronously.

10. Device according to Claim 9, **characterized by** an automatic control device, with which the size of the workpiece to be treated, in particular a pipe diameter, is detected and, in dependence on the workpiece size, the spray gun(s) and the irradiating device(s) are jointly adjusted radially to the optimum distance for treating the workpiece.

11. Device according to one of Claims 8 to 10, **characterized in that** the irradiating device is arranged in a space that is closed off apart from the region of the feed path and **in that** at the outlet opening (44) of this space there is arranged a closure device (45, 46), preferably consisting of two pivotable flaps (45) or an annular diaphragm (46), which closes the outlet opening (44) completely as long as the workpiece is not being passed through there or closes it partially - all but for a necessary passage - if the workpiece is being passed through there.

## Revendications

1. Installation, en particulier installation de laquage, pour le revêtement de pièces (10, 34) qui sont guidées le long d'une section de transport linéaire à travers un tambour rotatif (13) ayant une ouverture d'entrée (131) et une ouverture de sortie (132) et qui sont pulvérisées au moyen d'au moins un pistolet pulvérisateur (12), le tambour (13) étant connecté à un dispositif d'aspiration, **caractérisée en ce que**
le tambour (13) posséde, vu depuis l'ouverture d'entrée (131) dans la direction de transport (11) et vu depuis la direction de sortie (132) à l'encontre de la direction de transport (11) à chaque fois un diamètre croissant jusqu'à une dimension maximale, et **en ce que** dans la région du plus grand diamètre du tambour est disposée une fente d'aspiration (135) de forme annulaire connectée au dispositif d'aspiration.

2. Installation selon la revendication 1, **caractérisée en ce qu'**un canal d'aspiration (15) s'étendant autour de la fente d'aspiration (135) présente en partie une surface d'enveloppe intérieure s'élargissant en spirale en section transversale.

3. Installation selon l'une quelconque des revendications 1 ou 2, **caractérisée en ce que** plusieurs pistolets pulvérisateurs (12) disposés de préférence en des positions angulaires équidistantes les unes des autres sont disposés dans la région de l'ouverture d'entrée (131), les pistolets pulvérisateurs (12) pouvant être réglés radialement.

4. Installation selon l'une quelconque des revendications 1 à 3, **caractérisée en ce que** le tambour (13) est réalisé avec une symétrie spéculaire par rapport à un plan situé perpendiculairement à la section de transport.

5. Installation selon l'une quelconque des revendications 1 à 4, **caractérisée en ce que** le dispositif d'aspiration présente une tour de séparation (29) avec un filtre (31), à travers laquelle le flux d'air ou d'aérosol peut être guidé de préférence vers le haut.

6. Installation selon l'une quelconque des revendications 1 à 5, **caractérisée en ce que** dans la région inférieure du canal d'aspiration (15) s'étendant autour de la fente d'aspiration annulaire (135) est prévu un récipient de collecte (23) pour les liquides séparés, lequel est de préférence connecté par une conduite de retour (24) à un réservoir de matière à pulvériser (25), dans laquelle conduite sont disposés une pompe de matière recyclée (26) et un filtre pour matière à pulvériser (27).

7. Installation selon l'une quelconque des revendications 1 à 6, **caractérisée en ce que** le tambour (13) est fixé dans un boîtier (36) qui est disposé dans un bâti fixe (39) de manière réglable en hauteur et/ou déplaçable horizontalement transversalement à la direction de transport (11).

8. Installation selon l'une quelconque des revendications 1 à 7, **caractérisée en ce que**, vu dans la direction de transport (11) derrière l'ouverture de sortie (132), au moins un dispositif pour pulvériser la pièce est prévu, de préférence au moins une lampe aux UV (21) pour durcir la laque aux UV, le ou les dispositifs de pulvérisation étant disposés de préférence de manière réglable radialement.

9. Installation selon la revendication 8, **caractérisée en ce que** le ou les dispositifs de pulvérisation et le ou les pistolets pulvérisateurs sont connectés les uns aux autres par le biais d'un dispositif de synchronisation de telle sorte qu'il se produise un réglage radial de manière synchrone.

10. Installation selon la revendication 9, **caractérisée par** un dispositif de réglage automatique avec lequel la taille, notamment un diamètre de tube de la pièce à traiter est détecté(e) et le ou les pistolets pulvérisateurs et le ou les dispositifs de pulvérisation sont réglés radialement en commun en fonction de la taille de la pièce à la mesure de distance optimale pour le traitement de la pièce.

11. Installation selon l'une quelconque des revendications 8 à 10, **caractérisée en ce que** le dispositif de pulvérisation est disposé dans un espace fermé à l'exception de la région de la section de transport et **en ce qu'**au niveau de l'ouverture de sortie (44) de cet espace est disposé un dispositif de fermeture (45, 46), constitué de préférence de deux clapets pivotants (45) ou d'un diaphragme annulaire (46) qui, tant que la pièce n'a pas été guidée à travers elle, ferme complètement l'ouverture de sortie (44) ou, lorsque la pièce a été guidée à travers elle, ferme l'ouverture de sortie en partie à l'exception d'une région de passage nécessaire.
